# EUROPEAN PATENT APPLICATION

(11) **EP 4 382 326 A1**
(43) Date of publication of application: **12.06.2024**
(21) Application number: 22855094.3
(22) Date of filing: 27.06.2022
(51) Int. Cl.: B60H 1/00, B60H 3/06

(54) **METHOD AND APPARATUS FOR CHECKING SERVICE LIFE OF AIR CONDITIONER FILTER, CONTROLLER, SYSTEM, AND VEHICLE**

(30) Priority: 09.08.2021 CN 202110910450
(71) Applicant: Great Wall Motor Company Limited, Baoding, Hebei 071000 (CN)
(72) Inventor: WANG, Kaituo, Baoding, Hebei 071000 (CN); JIA, Huipeng, Baoding, Hebei 071000 (CN); LIU, Haiming, Baoding, Hebei 071000 (CN)
(74) Representative: Klunker IP Patentanwälte PartG mbB
(86) International application number: PCT/CN2022/101570
(87) International publication number: WO 2023/016109

(57) **Abstract**

The present application provides a method and a device for detecting a service life of a filter element of an air conditioning, a controller, a system, and a vehicle, the method includes: obtaining an initial service life of the filter element of the air conditioning; and calculating a current service life of the filter element of the air conditioning according to the initial service life of the filter element of the air conditioning, a voltage value at both ends of a blower of the air conditioning, a corresponding current value of the blower, and an operating state of the air conditioning. The present application can improve the accuracy of detecting the service life of the filter element of the air conditioning.

## Description

The present application claims priority of a Chinese patent application, with application No. CN202110910450.4, filed on August 9, 2021; the disclosed content of the previous application is incorporated here by reference as a whole.

### TECHNICAL FIELD

The present application relates to the technical field of a vehicle air conditioning, and more particularly to a method and a device for detecting a service life of a filter element of an air conditioning, a controller, a computer-readable storage medium, a system, and a vehicle.

### BACKGROUND

With the popularization of vehicles, the demands for the vehicles are increasing, and the demand for air quality inside the vehicles is also increasing. Generally, various non-woven fabrics are produced by refining petroleum to obtain materials for the filter element of the air conditioning. However, the natural degradation rate of non-woven fabrics is very slow, and the replaced filter elements have no reuse value. The replacement of the filter elements of the vehicle is often checked together with the maintenance and repair of the vehicle. If the filter element of the air conditioning is replaced too early, it will pollute the environment. If the filter element of the air conditioning is replaced too late, it will affect the air quality inside the vehicle. The service life of the filter element is closely related to the driving environment of the user and the quality of the filter element.

However, currently, the service life detecting of the filter element of the air conditioning is usually done manually during maintenance to check the condition of the filter element and replace is according to the user's wishes. There is no automatic and accurate method for detecting the service life of the filter element of the air conditioning.

Therefore, how to improve the accuracy of detecting the service life of the filter element of the air conditioning is an urgent problem that existing technology needs to solve.

### TECHNICAL PROBLEM

The present application provides a method and a device for detecting a service life of a filter element of an air conditioning, a controller, a system, and a vehicle, which can solve the problem that how to improve the accuracy of detecting the service life of the filter element of the air conditioning.

### SUMMARY

In a first aspect, the present application provides a method for detecting a service life of a filter element of an air conditioning, which includes:
obtaining an initial service life of the filter element of the air conditioning; and
calculating a current service life of the filter element of the air conditioning according to the initial service life of the filter element of the air conditioning, a voltage value at both ends of a blower of the air conditioning, a corresponding current value of the blower, and an operating state of the air conditioning.

In a possible implementation, the step of obtaining the initial service life of the filter element of the air conditioning includes:
determining whether the filter element of the air conditioning has been replaced compared with that before a vehicle is power off after the vehicle is powered on; and
performing an initialization step if the filter element of the air conditioning has been replaced, and obtaining the initial serve life of the filter element of the air conditioning according a preset initial assignment algorithm.

In a possible implementation, after the step of determining whether the filter element of the air conditioning has been replaced compared with that before the vehicle is power off, the method further includes:
setting a preset mark position to be a first preset state if the filter element of the air conditioning is a replaced filter element;
setting the preset mark position to be a second preset state if the filter element of the air conditioning is a filter element not being replaced; and
determining whether to perform the initialization step according to a state of the preset mark position.

In a possible implementation, the method further includes:
switching the state of the preset mark position from the first preset state to the second preset state after the initialization step is performed.

In a possible implementation, the step of obtaining the initial service life of the filter element of the air conditioning according the preset initial assignment algorithm includes:
obtaining powers of the blower under a plurality of different preset gears in a preset operating state of the air conditioning; and
obtaining the initial service life of the filter element of the air conditioning corresponding to each gear in turn: regarding to a target gear, obtaining the initial service life of the filter element of the air conditioning corresponding to the target gear according to a power of the blower under the target gear, a wind resistance of a warm air core of the air conditioning corresponding to the target gear, a preset value corresponding to the target gear, and a preset value and a preset coefficient corresponding to the preset operating state; wherein the target gear is any one of the plurality of different preset gears.

In a possible implementation, obtaining the initial service life of the filter element of the air conditioning corresponding to the target gear through a first preset formula, and the first preset formula is: Offset=votage*current*exp[a*Blowerlevel+b*recycleMode+c*TempMotor+d *AirMode]+g*WarmAirCore+f
in which, *Offset* is the initial service life of the filter element of the air conditioning corresponding to the target gear; *votage* is the voltage value at both ends of the blower under the target gear, *current* is the current value corresponding to the blower under the target gear, *WarmAirCore* is the wind resistance of the warm air core corresponding to the target gear;
*exp[a*Blowerlevel*+*b*recycleMode*+*c*TempMotor*+*d*AirMode]* is used to indicate an exponential calculation taking a constant *e* as a base number and *a*Blowerlevel*+*b*recycleMode*+*c*TempMotor*+*d*AirMode* as *a* index, in which, *Blowerlevel* is the preset value corresponding to the target gear, *recycleMode* is a preset value corresponding to a recycle mode of the air conditioning in the preset operating state, *TempMotor* is a preset value corresponding to a temperature damper position of the air conditioning in the preset operating state, and *AirMode* is a preset value corresponding to an air outlet mode of the air conditioning in the preset operating state; and
in which, *a*, *b*, *c*, *d*, *g*, *f* are preset constants.

In a possible implementation, the preset operating state of the air conditioning is that the recycle mode of the air conditioning is an internal recycle mode, the temperature damper position is a coldest end, and the air outlet mode is a defrost mode.

In a possible implementation, the step of calculating the current service life of the filter element of the air conditioning includes:
calculating the current service life of the filter element of the air conditioning according to a second preset formula, and the second preset formula is: A/CFilterlife=Offset-votage*current*exp[K1*Blowerlevel-K2*AirMode- K3*recycleMode-K4*TempMotor]
in which, *A*/*CFilterlife* is the current service life of the filter element of the air conditioning, *Offset* is the initial service life of the filter element of the air conditioning corresponding to a current gear of the blower, *votage* is the voltage value at both ends of the blower under the current gear, and *current* is the current value corresponding to the blower under the current gear;
*exp[K1*Blowerlevel-K2*AirMode-K3*recycleMode-K4*TempMotor]* is used to indicate an exponential calculation taking a constant e as a base number and *K1*Blowerlevel-K2*AirMode-K3*recycleMode-K4*TempMotor* as *a* index; in which, *Blowerlevel* is the preset value corresponding to the blower under the current gear, *AirMode* is a preset value corresponding to a current air outlet mode, *recycleMode* is a preset value corresponding to a current recycle mode, *TempMotor* is a preset value corresponding to a current temperature damper position, *K1* is a preset coefficient corresponding to the blower under the current gear, *K2* is a preset coefficient corresponding to the current air outlet mode, *K3* is a preset coefficient corresponding to a current recycle mode, and *K4* is a preset coefficient corresponding to a current temperature damper position.

In a possible implementation, the method further includes:
setting the service life of the corresponding filter element of the air conditioning as a first score value when the *A*/*CFilterlife* is the first preset value;
setting the service life of the corresponding filter element of the air conditioning as a second score value when the *A*/*CFilterlife* is the second preset value; and
obtaining a score value corresponding to the service life of the filter element of the air conditioning according to a linear interpolation algorithm when the *A*/*CFilterlife* is greater than the second preset value and less than the first preset value.

In a possible implementation, the method further includes:
sending a notification message to a user by a voice or an in-vehicle display, or sending the notification message to an user terminal; in which the notification message includes the score value of the service life of the filter element of the air conditioning, or a preset state corresponding to the score value of the filter element of the air conditioning; and
in which, the notification message is further configured for instructing the user to replace the filter element of the air conditioning if the score value of the service life of the filter element of the air conditioning is the second score value.

In a second aspect, the present application provides a device for detecting a service life of a filter element of an air conditioning, which includes:
an initial service life obtaining unit, configured for obtaining an initial service life of the filter element of the air conditioning; and
a current service life obtaining unit, configured for calculating a current service life of the filter element of the air conditioning according to the initial service life of the filter element of the air conditioning, a voltage value at both ends of a blower of the air conditioning, a corresponding current value of the blower, and an operating state of the air conditioning.

In a third aspect, the present application provides a controller, which includes a memory, a processor, and a computer program stored in the memory and capable of running on the processor; in which, the processor executes the computer program to implement the steps in the first aspect or any of the implementations of the first aspect.

In a fourth aspect, the present application provides a computer-readable storage medium stores a computer program, in which the computer program implements the steps the first aspect or any of the implementations of the first aspect when executed by a processor.

In a fifth aspect, the present application provides a system for detecting a service life of a filter element of an air conditioning, which includes:
a blower of an air conditioning;
a current sensor, mounted on a blower circuit and configured for detecting a current value corresponding to the blower; and
a controller, respectively connected with the blower and the current sensor;
the controller is configured for obtaining an initial service life of the filter element of the air conditioning, a voltage value at both ends of the blower, a corresponding current value of the blower, and an operating state of the air conditioning; and the controller is further configured for calculating a current service life of the filter element of the air conditioning according to the initial service life of the filter element of the air conditioning, the voltage value at both ends of the blower, the corresponding current value of the blower, and the operating state of the air conditioning.

In a possible implementation, the system further provided with a micro switch configured for detecting the filter element of the air conditioning; when the filter element of the air conditioning is removed, the micro switch is turned off, and when the filter element of the air conditioning is mounted, the micro switch is turned on; the controller is connected with the micro switch, the controller is further configured for:
determining whether the filter element of the air conditioning has been replaced compared with that before a vehicle is power off by determining whether the micro switch has switched from being turned off to being turned on after the vehicle is powered on; and performing an initialization step if the filter element of the air conditioning has been replaced, and obtaining the initial serve life of the filter element of the air conditioning according a preset initial assignment algorithm.

In a possible implementation, the system further includes a speed regulation module, the speed regulation module is respectively connected with the blower and the controller, the controller controls a speed of the blower by controlling an opening degree of the speed regulation module; under a target gear, if the voltage at both ends of the blower is less than a preset target voltage, the opening degree of the speed regulation module is increased; if the voltage at both ends of the blower is greater than the preset target voltage, the opening degree of the speed regulation module is decreased, so as to ensure that the voltage at both ends of the blower is the preset target voltage.

In a sixth aspect, the present application provides a vehicle, which includes the controller as described in the third aspect.

### BENEFICIAL EFFECTS

In the method and the device for detecting the service life of the filter element of the air conditioning, the controller, the system, and the vehicle provided in embodiments of the present application, the current service life of the filter element of the air conditioning can be obtained according to the initial service life of the filter element of the air conditioning, the voltage value at both ends of the blower of the air conditioning, the corresponding current value of the blower, and the operating state of the air conditioning, so that the accuracy of detecting the service life of the filter element of the air conditioning is improved.

### BRIEF DESCRIPTION OF THE DRAWINGS

In order to explain the embodiments of the present application more clearly, a brief introduction regarding the accompanying drawings that need to be used for describing the embodiments of the present application or the prior art is given below; it is obvious that the accompanying drawings described as follows are only some embodiments of the present application, for those skilled in the art, other drawings can also be obtained according to the current drawings on the premise of paying no creative labor.
FIG. 1 is an implementation flowchart of a method for detecting a service life of a filter element of an air conditioning provided in an embodiment of the present application;
FIG. 2 is another implementation flowchart of a method for detecting a service life of a filter element of an air conditioning provided in an embodiment of the present application;
FIG. 3 is another implementation flowchart of a method for detecting a service life of a filter element of an air conditioning provided in an embodiment of the present application;
FIG. 4 is another implementation flowchart of a method for detecting a service life of a filter element of an air conditioning provided in an embodiment of the present application;
FIG. 5 is another implementation flowchart of a method for detecting a service life of a filter element of an air conditioning provided in an embodiment of the present application;
FIG. 6 is another implementation flowchart of a method for detecting a service life of a filter element of an air conditioning provided in an embodiment of the present application;
FIG. 7 is a structural schematic diagram of a device for detecting a service life of a filter element of an air conditioning provided in an embodiment of the present application;
FIG. 8 is a structural schematic diagram of a system for detecting a service life of a filter element of an air conditioning provided in an embodiment of the present application; and
FIG. 9 is a schematic diagram of a controller provided in an embodiment of the present application.

### DETAILED DESCRIPTION OF EMBODIMENTS

In the following description, specific details such as specific system architecture, technology, etc. are proposed for the purpose of illustration rather than limitation, in order to thoroughly understand the embodiments of the present application. However, those skilled in the art should be aware that the present application can also be implemented in other embodiments without these specific details. In other cases, detailed descriptions of well-known systems, devices, circuits, and methods may be omitted to avoid unnecessary details hindering the description of the present application. In the present application, "and/or" includes any and all combinations of one or more related listed items.

In order to make the purpose, technical solution, and advantages of the present application clearer, specific embodiments will be provided below in conjunction with the accompanying drawings.

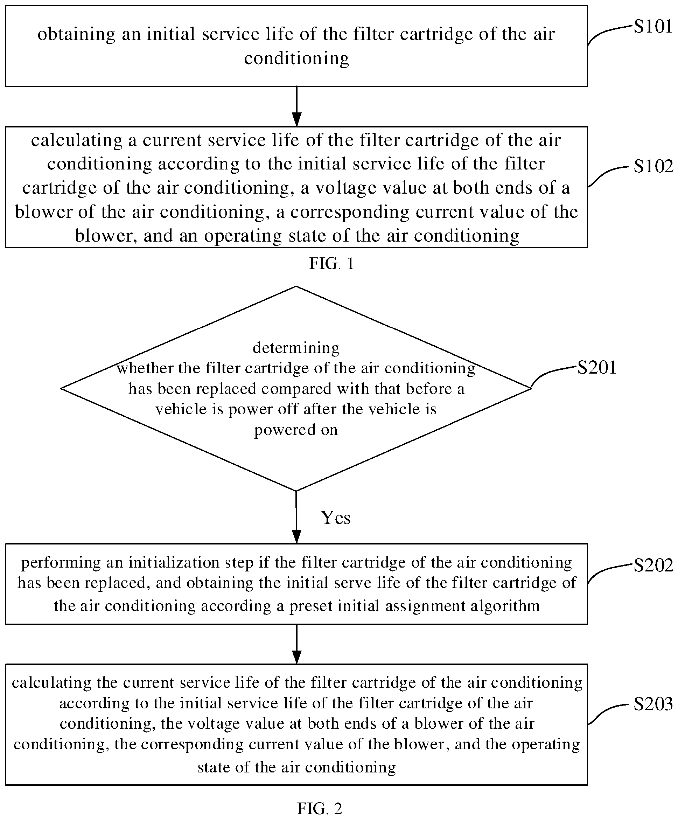

As shown in FIG. 1, which shows an implementation flowchart of a method for detecting a service life of a filter element (also referred as filter cartridge) of an air conditioning provided in an embodiment of the present application, in particular:
In step S101, obtaining an initial service life of the filter element of the air conditioning.

In the embodiment, the initial service life of the filter element of the air conditioning can be pre-set according to the type and material of the filter element of the air conditioning, or it can be obtained after the filter element of the air conditioning is mounted through a preset algorithm, which is not limited in the present application.

In step S102, calculating a current service life of the filter element of the air conditioning according to the initial service life of the filter element of the air conditioning, a voltage value at both ends of a blower of the air conditioning, a corresponding current value of the blower, and an operating state of the air conditioning.

When the service life of the filter element of the air conditioning is good, the filter performance of the air conditioning is good, the resistance of the air passing through the filter is small, and the current consumed by the blower is small. With the longer the use of the filter element, the filter performance of the air conditioning is poor, the resistance is larger, and the current consumed by the blower is large. Based on the initial service life of the filter element of the air conditioning, the air conditioning controller calculates the power consumption of the blower at the current gear state, that is, based on the voltage value at both ends of the blower and the corresponding current value, the service life of the filter element of the air conditioning at the current state is obtained.

In the method for detecting the service life of the filter element of the air conditioning provided in embodiments of the present application, the current service life of the filter element of the air conditioning can be obtained according to the initial service life of the filter element of the air conditioning, the voltage value at both ends of the blower of the air conditioning, the corresponding current value of the blower, and the operating state of the air conditioning, so that the accuracy of detecting the service life of the filter element of the air conditioning is improved.

In combination with FIG. 2, the embodiment of the present application further provides a method for detecting the service life of the filter element of the air conditioning, which includes:
In step S201, determining whether the filter element of the air conditioning has been replaced compared with that before a vehicle is power off after the vehicle is powered on.
in the embodiment, the filter elements before and after replacement can be of different types and materials.

In step S202, performing an initialization step if the filter element of the air conditioning has been replaced, and obtaining the initial serve life of the filter element of the air conditioning according a preset initial assignment algorithm.

If the filter element of the air conditioning is replaced, the initial service life of the filter element of the air conditioning is obtained according to the preset initial assignment algorithm.

In step S203, calculating the current service life of the filter element of the air conditioning according to the initial service life of the filter element of the air conditioning, the voltage value at both ends of a blower of the air conditioning, the corresponding current value of the blower, and the operating state of the air conditioning.

The specific implementation of the step can be found in Step S102, which is not limited in the present application.

The embodiment of the present application provides a method for detecting the service life of the filter element of the air conditioning, which determines whether the filter element of the air conditioning has been replaced compared with that before the vehicle is power off and whether the initial service life of the filter element of the air conditioning needs to be obtained through the initialization step. This method is applicable to the service life detection of filter element of the air conditioning of different types and materials, and the application scenario of the embodiment of the present application is expanded.

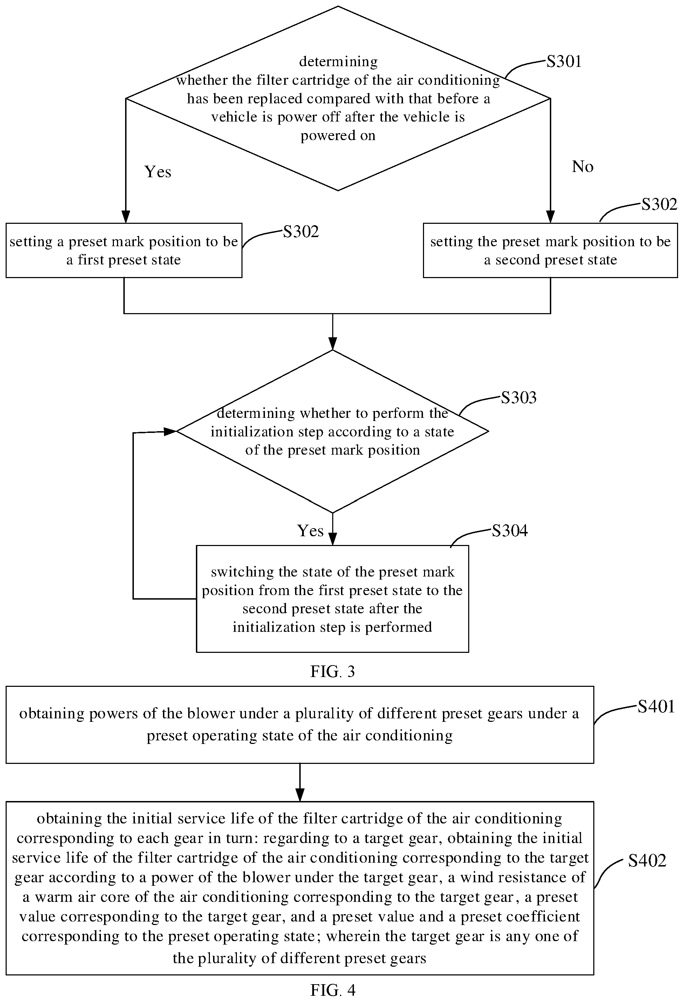

Further, in combination with FIG. 3, the embodiment of the present application further provides a method for detecting the service life of the filter element of the air conditioning, which includes:
In step S301, determining whether the filter element of the air conditioning has been replaced compared with that before a vehicle is power off after the vehicle is powered on.

In step S302, setting a preset mark position to be a first preset state if the filter element of the air conditioning is a replaced filter element; and setting the preset mark position to be a second preset state if the filter element of the air conditioning is a filter element not being replaced.

In the embodiment, the preset mark position is the initialization completion mark position. If the filter element of the air conditioning is not replaced, then the mark position 1 is initialized and corresponds to the second preset state of the step, which indicates that the initialization is completed and no initialization is required. If the filter element of the air conditioning is replaced, the mark position 0 is initialized and corresponds to the first preset state of the step, which indicates that initialization has not taken place and the initialization is required.

It should be noted that the setting of the first preset state and the second preset state above is only an example, and the specific setting method is not limited in the present application.

In step S303, determining whether to perform the initialization step according to a state of the preset mark position.

If the preset mark position is the first preset state, it indicates that the replaced filter element needs to be initialized to obtain its initial service life.

In the embodiment, the controller performs the initialization step and prompts the user through the central controller that the filter element of the air conditioning is self-testing. After the initialization parameters and initial service life of filter element of the air conditioning are obtained by the initialization algorithm, the initialization parameters of filter element of the air conditioning life are recorded.

In step S304, switching the state of the preset mark position from the first preset state to the second preset state after the initialization step is performed.

After the initialization step is completed, the initial service life of the filter element of the air conditioning is obtained. After the initialization is completed, the preset mark position is switched from the first preset state to the second preset state. After the vehicle is powered on, if the filter element has not been replaced, by determining the state of the preset mark position, it is determined that it is not necessary to initialize again.

As can be seen from the above, the present application is implemented in a specific way, that is, by setting the state of the preset mark position, it determines whether to perform the initialization step to obtain the initial service life of the filter element of the air conditioning. This method is applicable to the service life detection of filter element of the air conditioning of different types and materials, and the application scenario of the embodiment of the present application is expanded.

FIG. 4 shows another implementation flowchart of a method for detecting a service life of a filter element of an air conditioning provided in an embodiment of the present application, and the method includes:
In step S401, obtaining powers of the blower under a plurality of different preset gears in a preset operating state of the air conditioning.

In the embodiment, the power of the blower at each gear can be obtained by detecting the voltage value and the corresponding current value at both ends of the blower at different gears.

In step S402, obtaining the initial service life of the filter element of the air conditioning corresponding to each gear in turn: regarding to a target gear, obtaining the initial service life of the filter element of the air conditioning corresponding to the target gear according to a power of the blower under the target gear, a wind resistance of a warm air core of the air conditioning corresponding to the target gear, a preset value corresponding to the target gear, and a preset value and a preset coefficient corresponding to the preset operating state; wherein the target gear is any one of the plurality of different preset gears.

In the embodiment, obtaining the initial service life of the filter element of the air conditioning corresponding to the target gear through a first preset formula, and the first preset formula is: Offset=votage*current*exp[a*Blowerlevel+b*recycleMode+c*TempMotor+d *AirMode]+g*WarmAirCore+f

In which, *Offset* is the initial life of the filter element of the air conditioning corresponding to the target gear; *votage* is the voltage value at both ends of the blower under the target gear, *current* is the current value corresponding to the blower under the target gear, *WarmAirCore* is the wind resistance of the warm air core corresponding to the target gear;
*exp[a*Blowerlevel*+*b*recycleMode*+*c*TempMotor*+*d*AirMode]* is used to indicate an exponential calculation taking a constant *e* as a base number and *a*Blowerlevel+b*recycleMode+c*TempMotor+d*AirMode* as *a* index, wherein *Blowerlevel* is the preset value corresponding to the target gear, *recycleMode* is a preset value corresponding to a recycle mode of the air conditioning in the preset operating state, *TempMotor* is a preset value corresponding to a temperature damper position of the air conditioning in the preset operating state, and *AirMode* is a preset value corresponding to an air outlet mode of the air conditioning in the preset operating state; and

In which, *a*, *b*, *c*, *d*, *g*, *f* are preset constants.

In the embodiment, the preset operating state of the air conditioning is that the recycle mode of the air conditioning is an internal recycle mode, the temperature damper position is a coldest end, and the air outlet mode is a defrost mode.

In the embodiments of the present application, the corresponding nouns are interpreted as follows:
*Offset-* initial service life of filter element of the air conditioning;
*votage-* the voltage at both ends of the blower;
*current* - the current value corresponding to the blower;
*Blowerlevel* - blower gear, including a plurality of different preset geasr;
*recycleMode* - recycle mode, including but not limited to internal and external recycle modes;
*TempMotor* -- temperature damper position;
[43] *AirMode* - air outlet mode, including but not limited to a defrost mode, a dehumidification mode, a defog mode and a ventilation mode;
*WarmAirCore* -- wind resistance of the warm air core.

In the embodiment of the present application, when calculating the initial service life of the filter element of the air conditioning, that is, during the initialization step, the recycle mode *recycleMode* is designated as the internal recycle mode, the temperature damper position *TempMotor* is the coldest end, the air outlet mode *AirMode* is the defrost mode, and *a*, *b*, *c*, *d*, *g* and *f* are the preset constants. Calibration confirmation is required for each vehicle to suit different filter characteristics, and *f* is the preset correction value.

In the embodiment, the matrix table is arranged, which contains the corresponding calibration values for each parameter in each state.

The embodiment of the present application provides a method for detecting the service life of filter element of the air conditioning. The initial service life of filter element of the air conditioning corresponding to the target gear can be obtained according to the power of blower under the target gear, the wind resistance of the warm air core of the air conditioning corresponding to the target gear, the preset value corresponding to the target gear, the preset value and the preset coefficient corresponding to the preset operating state. This method is applicable to the service life detection of filter element of the air conditioning of different types and materials, and the application scenario of the embodiment of the present application is expanded.

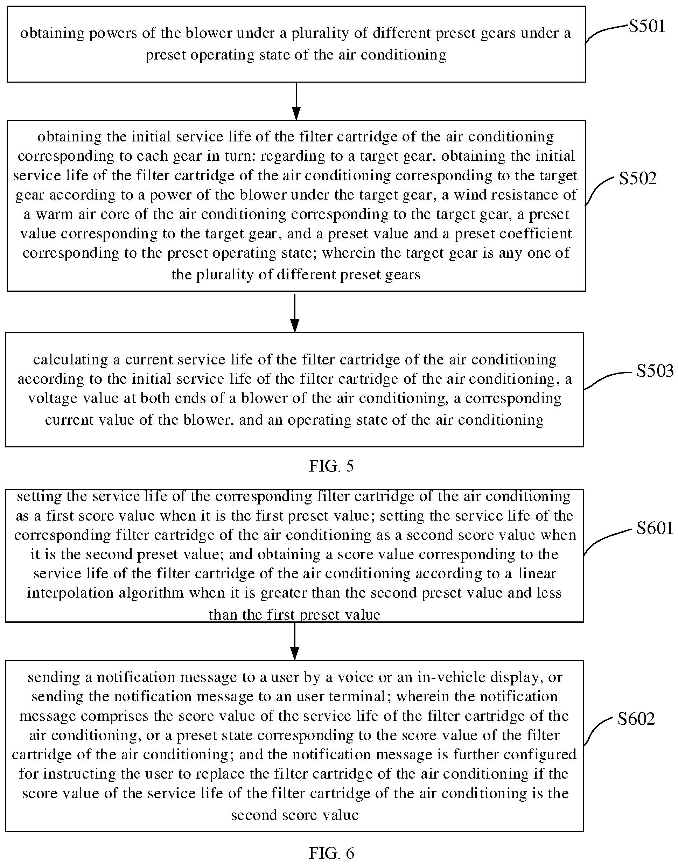

FIG. 5 shows another implementation flowchart of a method for detecting a service life of a filter element of an air conditioning provided in an embodiment of the present application, in combination with FIG. 5, the method includes:
In step S501, obtaining powers of the blower under a plurality of different preset gears in a preset operating state of the air conditioning.

In step S502, obtaining the initial service life of the filter element of the air conditioning corresponding to each gear in turn: regarding to a target gear, obtaining the initial service life of the filter element of the air conditioning corresponding to the target gear according to a power of the blower under the target gear, a wind resistance of a warm air core of the air conditioning corresponding to the target gear, a preset value corresponding to the target gear, and a preset value and a preset coefficient corresponding to the preset operating state; wherein the target gear is any one of the plurality of different preset gears.

In the embodiment, the specific implementation of steps S501 and S502 can be referred to the corresponding embodiments in FIG. 4, which will not be repeated in the present application.

In step S503, calculating a current service life of the filter element of the air conditioning according to the initial service life of the filter element of the air conditioning, a voltage value at both ends of a blower of the air conditioning, a corresponding current value of the blower, and an operating state of the air conditioning.

In the embodiment, the current service life of the filter element of the air conditioning is calculated by the second preset formula, which is: A/CFilterlife=Offset-votage*current*exp[K1*Blowerlevel-K2*AirMode- K3*recycleMode-K4*TempMotor]

In which, *A*/*CFilterlife* is the current service life of the filter element of the air conditioning, *Offset* is the initial service life of the filter element of the air conditioning corresponding to a current gear of the blower, *votage* is the voltage value at both ends of the blower under the current gear, and *current* is the current value corresponding to the blower under the current gear; *exp[K1***Blowerlevel-K2***AirMode-K3***recycleMode-K4***TempMotor]* is used to indicate an exponential calculation taking a constant *e* as a base number and *K1***Blowerlevel-K2***AirMode-K3***recycleMode-K4***TempMotor* as *a* index; wherein *Blowerlevel* is the preset value corresponding to the blower under the current gear, *AirMode* is a preset value corresponding to a current air outlet mode, *recycleMode* is a preset value corresponding to a current recycle mode, *TempMotor* is a preset value corresponding to a current temperature damper position, *K1* is a preset coefficient corresponding to the blower under the current gear, *K2* is a preset coefficient corresponding to the current air outlet mode, *K3* is a preset coefficient corresponding to a current recycle mode, and *K4* is a preset coefficient corresponding to a current temperature damper position.

In the embodiment, *K1* is different coefficients corresponding to different air volume gears of the air conditioning;
*K2* takes into account the parameters of different air outlet modes and different back pressures of the air conditioning;
*K3* takes into account the different parameters of suction air resistance of different internal and external recycles of the air conditioning;
*K4* is the parameter when the wind passes through different cores according to the temperature damper position.

In the embodiments of the present application, different filter elements need to be calibrated on the vehicle so that *K1*, *K2*, *K3*, *K4* are applicable to different filter element parameters.

The embodiment of the present application provides a method for detecting the service life of the filter element of the air conditioning, that is, a specific algorithm for calculating the service life of the filter element of the air conditioning, which improves the accuracy of detecting the service life of the filter element of the air conditioning.

In combination with FIG. 6, the embodiment of the present application also provides a method for detecting the service life of the filter element of the air conditioning, which includes:
In step S601, setting the service life of the corresponding filter element of the air conditioning as a first score value when the *A*/*CFilterlife* is the first preset value; setting the service life of the corresponding filter element of the air conditioning as a second score value when the *A*/*CFilterlife* is the second preset value; and obtaining a score value corresponding to the service life of the filter element of the air conditioning according to a linear interpolation algorithm when the *A*/*CFilterlife* is greater than the second preset value and less than the first preset value.

In the embodiment, when *A*/*CFilterlife* is the first preset value, such as *A*/*CFilterlife*=TBD1, the service life of the filter element of the air conditioning is the first score value, such as 100 points, when *A*/*CFilterlife* is the second preset value, such as *A*/*CFilterlife*=TBD2, the service life of the filter element of the air conditioning is the second score, such as 0 points, when TBD2<A/*CFilterlife*<TBD1, the linear interpolation algorithm is used to obtain the score value corresponding to the service life of the filter element of the air conditioning.

In step S602, sending a notification message to a user by a voice or an in-vehicle display, or sending the notification message to an user terminal; wherein the notification message comprises the score value of the service life of the filter element of the air conditioning, or a preset state corresponding to the score value of the filter element of the air conditioning; and the notification message is further configured for instructing the user to replace the filter element of the air conditioning if the score value of the service life of the filter element of the air conditioning is the second score value.

Through this step, the current service life of the filter element of the air conditioning is displayed to the user in real time, and the corresponding state can be obtained according to the score value of the service life of the filter element of the air conditioning, such as the state of 80 to 100 points is excellent, the state of 60-79 points is good, the state of 40-59 points is average, the state of 20-39 points is poor, and the state of 0-19 points is extremely poor. When the state is extremely poor, the user can be notified to replace the filter element in time, or when the service life of the filter element is 0 to remind the user to replace the filter element, which is not limited in the present application.

The embodiment of the present application provides a method for detecting the service life of filter element of the air conditioning. The corresponding score value or state can be obtained through the current service life of the filter element of the air conditioning, and the service life of filter element of the air conditioning can be prompted to the user through voice, display or send to the user terminal, so that the user can know the current service life of the filter element of the air conditioning in time and replace the filter element in time.

It should be understood that the sequence number of the steps in the above embodiments does not imply the order of execution, and that the order of execution of each process shall be determined by its function and internal logic, and shall not constitute any limitation on the implementation process of the embodiment of the present application.

The following are the device embodiments of the present application. For details not described in detail, reference may be made to the corresponding method embodiments above, and it shall be considered that the details not described in detail in the device embodiments are the same as those in the method embodiments and are clearly recorded in the specification.

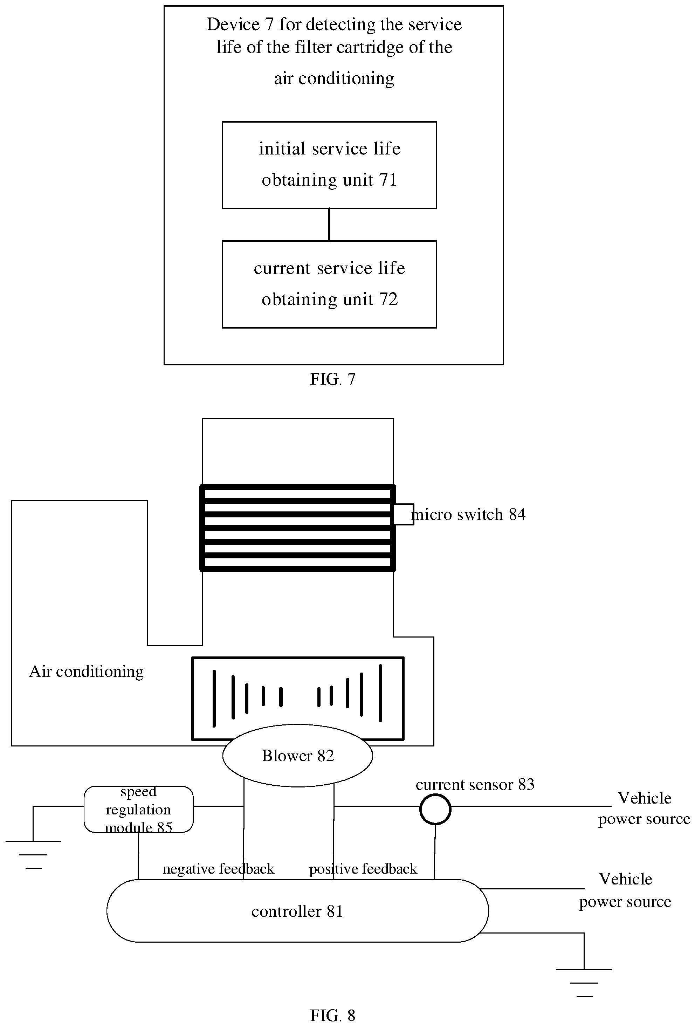

FIG. 7 shows a structural schematic diagram of a device for detecting the service life of the filter element of the air conditioning provided by the embodiment of the present application. For ease of explanation, only the parts related to the embodiment of the present application are shown, detailed as follows:
As shown in FIG. 7, the device 7 for detecting the service life of the filter element of the air conditioning includes: an initial service life obtaining unit 71 and a current service life obtaining unit 72;

The initial service life acquisition unit 71 is configured for obtaining an initial service life of the filter element of the air conditioning.

The current service life obtaining unit 72 is configured for calculating a current service life of the filter element of the air conditioning according to the initial service life of the filter element of the air conditioning, a voltage value at both ends of a blower of the air conditioning, a corresponding current value of the blower, and an operating state of the air conditioning.

In the embodiment, the initial service life acquisition unit 71 is configured for:
determining whether the filter element of the air conditioning has been replaced compared with that before a vehicle is power off after the vehicle is powered on; and
performing an initialization step if the filter element of the air conditioning has been replaced, and obtaining the initial serve life of the filter element of the air conditioning according a preset initial assignment algorithm.

The initial service life obtaining unit 71 is further configured for:
setting a preset mark position to be a first preset state if the filter element of the air conditioning is a replaced filter element;
setting the preset mark position to be a second preset state if the filter element of the air conditioning is a filter element not being replaced; and
determining whether to perform the initialization step according to a state of the preset mark position.

The initial service life obtaining unit 71 is further configured for:
switching the state of the preset mark position from the first preset state to the second preset state after the initialization step is performed.

The initial service life obtaining unit 71 is further configured for:
obtaining powers of the blower under a plurality of different preset gears in a preset operating state of the air conditioning; and
obtaining the initial service life of the filter element of the air conditioning corresponding to each gear in turn: regarding to a target gear, obtaining the initial service life of the filter element of the air conditioning corresponding to the target gear according to a power of the blower under the target gear, a wind resistance of a warm air core of the air conditioning corresponding to the target gear, a preset value corresponding to the target gear, and a preset value and a preset coefficient corresponding to the preset operating state; wherein the target gear is any one of the plurality of different preset gears.

In an embodiment, the initial service life obtaining unit 71 is further configured for obtaining the initial service life of the filter element of the air conditioning corresponding to the target gear through a first preset formula, and the first preset formula is: Offset=votage*current*exp[a*Blowerlevel+b*recycleMode+c*TempMotor+d *AirMode]+g*WarmAirCore+f

In which, *Offset* is the initial life of the filter element of the air conditioning corresponding to the target gear; *votage* is the voltage value at both ends of the blower under the target gear, *current* is the current value corresponding to the blower under the target gear, *WarmAirCore* is the wind resistance of the warm air core corresponding to the target gear;
*exp[a***Blowerlevel*+*b***recycleMode*+*c***TempMotor*+*d***AirMode]* is used to indicate an exponential calculation taking a constant *e* as a base number and *a***Blowerlevel*+*b***recycleMode*+*c***TempMotor*+*d***AirMode* as *a* index, wherein *Blowerlevel* is the preset value corresponding to the target gear, *recycleMode* is a preset value corresponding to a recycle mode of the air conditioning in the preset operating state, *TempMotor* is a preset value corresponding to a temperature damper position of the air conditioning in the preset operating state, and *AirMode* is a preset value corresponding to an air outlet mode of the air conditioning in the preset operating state; and

In which, *a*, *b*, *c*, *d*, *g*, *f are* preset constants.

In an embodiment, the preset operating state of the air conditioning is that the recycle mode of the air conditioning is an internal recycle mode, the temperature damper position is a coldest end, and the air outlet mode is a defrost mode.

In an embodiment, the current service life obtaining unit 72 is configured for:
calculating the current service life of the filter element of the air conditioning according to a second preset formula, and the second preset formula is: A/CFilterlife=Offset-votage*current*exp[K1*Blowerlevel-K2*AirMode- K3*recycleMode-K4*TempMotor]

In which, *A*/*CFilterlife* is the current service life of the filter element of the air conditioning, *Offset* is the initial service life of the filter element of the air conditioning corresponding to a current gear of the blower, *votage* is the voltage value at both ends of the blower under the current gear, and *current* is the current value corresponding to the blower under the current gear;
*exp[K1***Blowerlevel-K2***AirMode-K3***recycleMode-K4***TempMotor]* is used to indicate an exponential calculation taking a constant e as a base number and *K1***Blowerlevel-K2***AirMode-K3***recycleMode-K4***TempMotor* as *a* index; wherein *Blowerlevel* is the preset value corresponding to the blower under the current gear, *AirMode* is a preset value corresponding to a current air outlet mode, *recycleMode* is a preset value corresponding to a current recycle mode, *TempMotor* is a preset value corresponding to a current temperature damper position, *K1* is a preset coefficient corresponding to the blower under the current gear, *K2* is a preset coefficient corresponding to the current air outlet mode, *K3* is a preset coefficient corresponding to a current recycle mode, and *K4* is a preset coefficient corresponding to a current temperature damper position.

In an embodiment, the current service life obtaining unit 72 is configured for:
setting the service life of the corresponding filter element of the air conditioning as a first score value when the *A*/*CFilterlife* is the first preset value;
setting the service life of the corresponding filter element of the air conditioning as a second score value when the *A*/*CFilterlife* is the second preset value; and
obtaining a score value corresponding to the service life of the filter element of the air conditioning according to a linear interpolation algorithm when the *A*/*CFilterlife* is greater than the second preset value and less than the first preset value.

In an embodiment, the current service life obtaining unit 72 is configured for:
sending a notification message to a user by a voice or an in-vehicle display, or sending the notification message to an user terminal; wherein the notification message comprises the score value of the service life of the filter element of the air conditioning, or a preset state corresponding to the score value of the filter element of the air conditioning; and
the notification message is further configured for instructing the user to replace the filter element of the air conditioning if the score value of the service life of the filter element of the air conditioning is the second score value.

As can be seen from the above, the present application obtains the current service life of the filter element of the air conditioning, by obtaining the initial service life of the filter element of the air conditioning based on the current operating state of the air conditioning, the voltage value at both ends of the blower of the air conditioning, and the corresponding current value of the blower of the air conditioning, thus the accuracy of detecting the service life of the filter element of the air conditioning is improved.

FIG. 8 is a schematic diagram of a system for detecting a service life of a filter element of an air conditioning, in combination with FIG. 8, the system includes: a controller 81, a blower 82 of the air conditioning, and a current sensor 83 mounted on the air conditioning circuit; the controller 81 is respectively connected with the blower 82 and the current sensor 83; and the controller 81 is used to realize the steps of the method for detecting the service life of the filter element of the air conditioning in the corresponding embodiments shown in FIGS. 1 to 6.

The current sensor 83 is configured for detecting the current value corresponding to the blower;

The controller 81 is configured for obtaining the initial service life of the filter element of the air conditioning, the voltage value at both ends of the blower 82, the corresponding current value of the blower and the operating state of the air conditioning;

The controller 81 is further configured for calculating the current service life of the filter element of the air conditioning based on the initial service life of the filter element of the air conditioning, the voltage value at both ends of the blower of the air conditioning, the corresponding current value of the blower of the air conditioning and the operating state of the air conditioning.

In an embodiment, the system is further provided with a micro switch 84 for detecting the filter element of the air conditioning, when the filter element of the air conditioning is removed, the micro switch 84 is turned off, when the filter element of the air conditioning is mounted, the micro switch 85 is turned on, the controller 81 is connected with the micro switch 84; and the controller 81 further configured for:
determining whether the filter element of the air conditioning has been replaced compared with that before a vehicle is power off by determining whether the micro switch 84 has switched from being turned off to being turned on after the vehicle is powered on; and performing an initialization step if the filter element of the air conditioning has been replaced, and obtaining the initial serve life of the filter element of the air conditioning according a preset initial assignment algorithm.

In an embodiment, the system is further provided with a speed regulation module 85; the speed regulation module 85 is respectively connected with the blower 82 and the controller 81, the controller 81 controls a speed of the blower 82 by controlling an opening degree of the speed regulation module 85; under a target gear, if the voltage at both ends of the blower 82 is less than a preset target voltage, the opening degree of the speed regulation module 85 is increased; if the voltage at both ends of the blower 82 is greater than the preset target voltage, the opening degree of the speed regulation module 85 is decreased, so as to ensure that the voltage at both ends of the blower 82 is the preset target voltage.

The embodiment of the present application provides a system for detecting the service life of the filter element of the air conditioning; by obtaining the initial service life of the filter element of the air conditioning based on the current operating state of the air conditioning, the voltage value at both ends of the blower of the air conditioning, and the corresponding current value of the blower of the air conditioning, thus the accuracy of detecting the service life of the filter element of the air conditioning is improved.

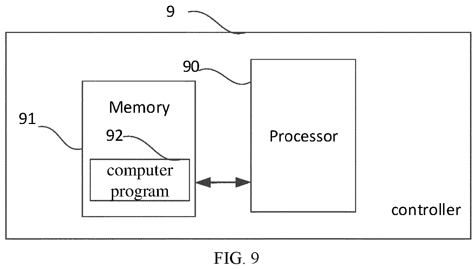

FIG. 9 is a schematic diagram of the controller provided in the embodiment of the present application. As shown in FIG. 9, the controller 9 of the embodiment includes: a processor 90, a memory 91, and a computer program 92 stored in the memory 91 and capable of running on the processor 90. The processor 90 executes the computer program 92 to implement the steps of the method for detecting the service life of the filter element of the air conditioning in the above embodiments, such as steps 101 to 102 as shown in FIG. 1. Alternatively, the processor 90 implements the functions of the modules/units of the device in the above embodiments when executing the computer program 92, such as the functions of modules/units 71 to 72 shown in FIG. 7.

In an embodiment, the present application further provides a vehicle includes the controller as shown in FIG. 9.

Illustratively, the computer program 92 can be segmented into one or more modules/units, which are stored in the memory 91 and executed by the processor 90 to complete the present application. The one or more modules/units can be a series of computer program instruction segments capable of performing a specific function, which is used to describe the execution process of the computer program 92 in the controller 9. For example, the computer program 92 can be segmented into modules/units 71 and 72 as shown in FIG. 7.

The controller 9 can include, but is not limited to, a processor 90 and a memory 91. It can be understood by those skilled in the art that FIG. 9 is only an example of controller 9 and does not constitute a limitation for the controller 9, which can include more or fewer components than shown, or some combination of components, or different components, for example, the controller can also include input/output devices, network access devices, buses, etc.

The processor 90 can be CPU (Central Processing Unit), and can also be other general purpose processor, DSP (Digital Signal Processor), ASIC (Application Specific Integrated Circuit), FGPA (Field-Programmable Gate Array), or some other programmable logic devices, discrete gate or transistor logic device, discrete hardware component, etc. The general purpose processor can be a microprocessor, or alternatively, the processor can also be any conventional processor and so on.

The memory 91 can be an internal storage unit of the controller 9, such as a hard disk or a memory of the controller 9. The memory 91 can also be an external storage device of the controller 9, such as a plug-in hard disk, a SMC (Smart Media Card), a SD (Secure Digital) card, a FC (Flash Card) equipped on the controller 9. Further, the memory 91 may include both the internal storage unit and the external storage device of the controller 9, either. The memory 91 is configured to store the computer programs, and other procedures and data needed by the controller 9 for determining wellbore cross-sectional shape. The memory 91 can also be configured to storing data that has been output or being ready to be output temporarily.

It can be clearly understood by the persons skilled in the art that, for describing conveniently and concisely, dividing of the aforesaid various functional units, functional modules is described exemplarily merely, in an actual application, the aforesaid functions can be assigned to different functional units and functional modules to be accomplished, that is, an inner structure of a data synchronizing device is divided into functional units or modules so as to accomplish the whole or a part of functionalities described above. The various functional units, modules in the embodiments can be integrated into a processing unit, or each of the units exists independently and physically, or two or more than two of the units are integrated into a single unit. The aforesaid integrated unit can by either actualized in the form of hardware or in the form of software functional units. In addition, specific names of the various functional units and modules are only used for distinguishing from each other conveniently, but not intended to limit the protection scope of the present application. Regarding a specific working process of the units and modules in the aforesaid device, reference can be made to a corresponding process in the aforesaid method embodiments, it is not repeatedly described herein.

In the aforesaid embodiments, the description of each of the embodiments is emphasized respectively, regarding a part of one embodiment which isn' t described or disclosed in detail, please refer to relevant descriptions in some other embodiments.

Those skilled in the art may aware that, the elements and algorithm steps of each of the examples described in connection with the embodiments disclosed herein can be implemented in electronic hardware, or in combination with computer software and electronic hardware. Whether these functions are implemented by hardware or software depends on the specific application and design constraints of the technical solution. The skilled people could use different methods to implement the described functions for each particular application, however, such implementations should not be considered as going beyond the scope of the present application.

It should be understood that, in the embodiments of the present application, the disclosed device/controller and method could be implemented in other ways. For example, the device described above are merely illustrative; for example, the division of the units is only a logical function division, and other division could be used in the actual implementation, for example, multiple units or components could be combined or integrated into another system, or some features can be ignored, or not performed. In another aspect, the coupling or direct coupling or communicating connection shown or discussed could be an indirect, or a communicating connection through some interfaces, devices or units, which could be electrical, mechanical, or otherwise.

The units described as separate components could or could not be physically separate, the components shown as units could or could not be physical units, which can be located in one place, or can be distributed to multiple network elements. Parts or all of the elements could be selected according to the actual needs to achieve the object of the present embodiment.

In addition, the various functional units in each of the embodiments of the present application can be integrated into a single processing unit, or exist individually and physically, or two or more than two units are integrated into a single unit. The aforesaid integrated unit can either be achieved by hardware, or be achieved in the form of software functional units.

If the integrated unit is achieved in the form of software functional units, and is sold or used as an independent product, it can be stored in a computer readable storage medium. Based on this understanding, a whole or part of flow process of implementing the method in the aforesaid embodiments of the present application can also be accomplished by using computer program to instruct relevant hardware. When the computer program is executed by the processor, the steps in the various method embodiments described above can be implemented. Wherein, the computer program comprises computer program codes, which can be in the form of source code, object code, executable documents or some intermediate form, etc. The computer readable medium can include: any entity or device that can carry the computer program codes, recording medium, USB flash disk, mobile hard disk, hard disk, optical disk, computer storage device, ROM (Read-Only Memory), RAM (Random Access Memory), electrical carrier signal, telecommunication signal and software distribution medium, etc. It needs to be explained that, the contents contained in the computer readable medium can be added or reduced appropriately according to the requirement of legislation and patent practice in a judicial district, for example, in some judicial districts, according to legislation and patent practice, the computer readable medium doesn' t include electrical carrier signal and telecommunication signal.

As stated above, the aforesaid embodiments are only intended to explain but not to limit the technical solutions of the present application. Although the present application has been explained in detail with reference to the above-described embodiments, it should be understood for the ordinary skilled one in the art that, the technical solutions described in each of the above-described embodiments can still be amended, or some technical features in the technical solutions can be replaced equivalently; these amendments or equivalent replacements, which won' t make the essence of corresponding technical solution to be broken away from the spirit and the scope of the technical solution in various embodiments of the present application, should all be included in the protection scope of the present application.

## Claims

1. A method for detecting a service life of a filter element of an air conditioning, comprising:
obtaining an initial service life of the filter element of the air conditioning; and
calculating a current service life of the filter element of the air conditioning according to the initial service life of the filter element of the air conditioning, a voltage value at both ends of a blower of the air conditioning, a corresponding current value of the blower, and an operating state of the air conditioning.

2. The method for detecting the service life of the filter element of the air conditioning according to claim 1, wherein the step of obtaining the initial service life of the filter element of the air conditioning comprises:
determining whether the filter element of the air conditioning has been replaced compared with that before a vehicle is power off after the vehicle is powered on; and
performing an initialization step if the filter element of the air conditioning has been replaced, and obtaining the initial serve life of the filter element of the air conditioning according a preset initial assignment algorithm.

3. The method for detecting the service life of the filter element of the air conditioning according to claim 2, wherein after the step of determining whether the filter element of the air conditioning has been replaced compared with that before the vehicle is power off, the method further comprises:
setting a preset mark position to be a first preset state if the filter element of the air conditioning is a replaced filter element;
setting the preset mark position to be a second preset state if the filter element of the air conditioning is a filter element not being replaced; and
determining whether to perform the initialization step according to a state of the preset mark position.

4. The method for detecting the service life of the filter element of the air conditioning according to claim 3, wherein the method further comprises:
switching the state of the preset mark position from the first preset state to the second preset state after the initialization step is performed.

5. The method for detecting the service life of the filter element of the air conditioning according to claim 2, wherein the step of obtaining the initial service life of the filter element of the air conditioning according the preset initial assignment algorithm comprises:
obtaining powers of the blower under a plurality of different preset gears in a preset operating state of the air conditioning; and
obtaining the initial service life of the filter element of the air conditioning corresponding to each gear in turn: regarding to a target gear, obtaining the initial service life of the filter element of the air conditioning corresponding to the target gear according to a power of the blower under the target gear, a wind resistance of a warm air core of the air conditioning corresponding to the target gear, a preset value corresponding to the target gear, and a preset value and a preset coefficient corresponding to the preset operating state; wherein the target gear is any one of the plurality of different preset gears.

6. The method for detecting the service life of the filter element of the air conditioning according to claim 5, wherein the initial service life of the filter element of the air conditioning corresponding to the target gear is obtained through a first preset formula, and the first preset formula is: Offset=votage*current*exp[a*Blowerlevel+b*recycleMode+c*TempMotor+d *AirMode]+g*WarmAirCore+f
wherein *Offset* is the initial service life of the filter element of the air conditioning corresponding to the target gear; *votage* is the voltage value at both ends of the blower under the target gear, *current* is the current value corresponding to the blower under the target gear, *WarmAirCore* is the wind resistance of the warm air core corresponding to the target gear;
*exp[a***Blowerlevel*+*b***recycleMode*+*c***TempMotor*+*d***AirMode]* is used to indicate an exponential calculation taking a constant *e* as a base number and *a***Blowerlevel*+*b***recycleMode*+*c***TempMotor*+*d***AirMode* as *a* index, wherein *Blowerlevel* is a preset value corresponding to the target gear, *recycleMode* is a preset value corresponding to a recycle mode of the air conditioning in the preset operating state, *TempMotor* is a preset value corresponding to a temperature damper position of the air conditioning in the preset operating state, and *AirMode* is a preset value corresponding to an air outlet mode of the air conditioning in the preset operating state; and
wherein *a*, *b*, *c*, *d*, *g*, *f* are preset constants.

7. The method for detecting the service life of the filter element of the air conditioning according to claim 6, wherein the preset operating state of the air conditioning is that the recycle mode of the air conditioning is an internal recycle mode, the temperature damper position is a coldest end, and the air outlet mode is a defrost mode.

8. The method for detecting the service life of the filter element of the air conditioning according to claim 5, wherein the step of calculating the current service life of the filter element of the air conditioning comprises:
calculating the current service life of the filter element of the air conditioning according to a second preset formula, and the second preset formula is: A/CFilterlife=Offset-votage*current*exp[K1*Blowerlevel-K2*AirMode- K3*recycleMode-K4*TempMotor]
wherein *A*/*CFilterlife* is the current service life of the filter element of the air conditioning, *Offset* is the initial service life of the filter element of the air conditioning corresponding to a current gear of the blower, *votage* is the voltage value at both ends of the blower under the current gear, and *current* is the current value corresponding to the blower under the current gear;
*exp[K1***Blowerlevel-K2***AirMode-K3***recycleMode-K4***TempMotor]* is used to indicate an exponential calculation taking a constant e as a base number and *K1*Blowerlevel-K2***AirMode-K3***recycleMode-K4***TempMotor* as *a* index; wherein *Blowerlevel* is a preset value corresponding to the blower under the current gear, *AirMode* is a preset value corresponding to a current air outlet mode, *recycleMode* is a preset value corresponding to a current recycle mode, *TempMotor* is a preset value corresponding to a current temperature damper position, *K1* is a preset coefficient corresponding to the blower under the current gear, *K2* is a preset coefficient corresponding to the current air outlet mode, *K3* is a preset coefficient corresponding to a current recycle mode, and *K4* is a preset coefficient corresponding to a current temperature damper position.

9. The method for detecting the service life of the filter element of the air conditioning according to claim 8, wherein the method further comprises:
setting the service life of the corresponding filter element of the air conditioning as a first score value when the *A*/*CFilterlife* is the first preset value;
setting the service life of the corresponding filter element of the air conditioning as a second score value when the *A*/*CFilterlife* is the second preset value; and
obtaining a score value corresponding to the service life of the filter element of the air conditioning according to a linear interpolation algorithm when the *A*/*CFilterlife* is greater than the second preset value and less than the first preset value.

10. The method for detecting the service life of the filter element of the air conditioning according to claim 9, wherein the method further comprises:
sending a notification message to a user by a voice or an in-vehicle display, or sending the notification message to an user terminal; wherein the notification message comprises the score value of the service life of the filter element of the air conditioning, or a preset state corresponding to the score value of the filter element of the air conditioning; and
wherein the notification message is further configured for instructing the user to replace the filter element of the air conditioning if the score value of the service life of the filter element of the air conditioning is the second score value.

11. A device for detecting a service life of a filter element of an air conditioning, comprising:
an initial service life obtaining unit, configured for obtaining an initial service life of the filter element of the air conditioning; and
a current service life obtaining unit, configured for calculating a current service life of the filter element of the air conditioning according to the initial service life of the filter element of the air conditioning, a voltage value at both ends of a blower of the air conditioning, a corresponding current value of the blower, and an operating state of the air conditioning.

12. A controller, comprising a memory, a processor, and a computer program stored in the memory and capable of running on the processor, wherein the processor executes the computer program to implement the steps of any of the methods according to claims 1 to 10

13. A computer-readable storage medium stores a computer program, which, when executed by a processor, causes the processor to implement the steps of any of the methods according to claims 1 to 10.

14. A system for detecting a service life of a filter element of an air conditioning, comprising:
a blower of an air conditioning;
a current sensor, mounted on a blower circuit and configured for detecting a current value corresponding to the blower; and
a controller, respectively connected with the blower and the current sensor;
wherein the controller is configured for obtaining an initial service life of the filter element of the air conditioning, a voltage value at both ends of the blower, a corresponding current value of the blower, and an operating state of the air conditioning; and the controller is further configured for calculating a current service life of the filter element of the air conditioning according to the initial service life of the filter element of the air conditioning, the voltage value at both ends of the blower, the corresponding current value of the blower, and the operating state of the air conditioning.

15. The system for detecting the service life of the filter element of the air conditioning according to claim 14, wherein the system further provided with a micro switch configured for detecting the filter element of the air conditioning; when the filter element of the air conditioning is removed, the micro switch is turned off, and when the filter element of the air conditioning is mounted, the micro switch is turned on; the controller is connected with the micro switch, the controller is further configured for:
determining whether the filter element of the air conditioning has been replaced compared with that before a vehicle is power off by determining whether the micro switch has switched from being turned off to being turned on after the vehicle is powered on; and performing an initialization step if the filter element of the air conditioning has been replaced, and obtaining the initial serve life of the filter element of the air conditioning according a preset initial assignment algorithm.

16. The system for detecting the service life of the filter element of the air conditioning according to claim 14 or15, wherein the system further comprises a speed regulation module, the speed regulation module is respectively connected with the blower and the controller, the controller controls a speed of the blower by controlling an opening degree of the speed regulation module; under a target gear, if the voltage at both ends of the blower is less than a preset target voltage, the opening degree of the speed regulation module is increased; if the voltage at both ends of the blower is greater than the preset target voltage, the opening degree of the speed regulation module is decreased, so as to ensure that the voltage at both ends of the blower is the preset target voltage.

17. A vehicle, comprising the controller according to claim 12.
